# EUROPÄISCHE PATENTANMELDUNG

(11) **EP 3 683 280 A1**
(43) Veröffentlichungstag der Anmeldung: **22.07.2020**
(21) Anmeldenummer: 19152554.2
(22) Anmeldetag: 18.01.2019
(51) Int. Cl.: C09D 103/06

(54) **VERFAHREN ZUR BESCHICHTUNG EINES SUBSTRATES, BESCHICHTETES SUBSTRAT SOWIE VERWENDUNG EINER BESCHICHTUNG**

(71) Anmelder: FRAUNHOFER-GESELLSCHAFT zur Förderung der angewandten Forschung e.V., 80686 München (DE)
(72) Erfinder: Gabriel, Christina, 14482 Potsdam (DE); Wanner, Dr. Matthias, 71063 Sindelfingen (DE); Buller, Dr. Jens, 14471 Potsdam (DE); Krawczyk, Dr. Katarzyna, 73730 Esslingen (DE)
(74) Vertreter: Pfenning, Meinig & Partner mbB

(57) **Zusammenfassung**

Die Erfindung betrifft ein Verfahren, zur Beschichtung eines Substrates, bei dem eine Lösung oder Dispersion, enthaltend oder bestehend aus mindestens einem Stärkeester, gelöst bzw. dispergiert in mindestens einem Lösungsmittel oder Lösungsmittelgemisch mit Hansen-Löslichkeitsparametern δ_{d} von 14 bis 19, δₚ von 2 bis 11, δₕ von 3 bis 15 MPa^{1/2}, zumindest bereichsweise zumindest einmal auf eine Oberfläche eines Substrates, ausgewählt aus der Gruppe bestehend aus Metallsubstraten, Glassubstraten und Kunststoffsubstraten mit Ausnahme von teilweise oder vollständig fluorierten Polymeren aufgebracht und anschließend getrocknet wird.

## Beschreibung

Die vorliegende Erfindung betrifft ein Verfahren zur Herstellung einer gut anhaftenden biobasierten Beschichtung auf einem ausgewählten Substrat mittels einer Lösung bzw. einer Dispersion mindestens eines Stärkeesters in einem Lösungsmittel mit spezifischen Lösungsparametern. Des Weiteren betrifft die vorliegende Erfindung ein beschichtetes Substrat, das mittels des erfindungsgemäßen Verfahrens hergestellt werden kann. Ebenso werden Verwendungsmöglichkeiten der aufgebrachten Beschichtung vorgestellt.

Als biobasierte Beschichtung, beispielsweise zum Schutz metallischer Substrate vor Korrosion, sind aus dem Stand der Technik verschiedenste Systeme bekannt.

Aus dem Stand der Technik sind beispielsweise Alkydharzsysteme als Beschichtungsmaterialien bekannt. Derartige Systeme sind allerdings mit Nachteilen behaftet:
- Bei den für die Alkydbindemittelsynthesen erforderlichen Komponenten sind lediglich die Öle/Fettsäuren biologischen Ursprungs. Sowohl die hierfür ebenfalls essentielle Dicarbonsäuren (Phthalsäure bzw. Isophthalsäure) wie auch die Polyole werden synthetisch aus fossilen Rohstoffen gewonnen. Alkydbindemittel bestehen daher zu erheblich geringerem Anteil aus nachwachsenden Rohstoffen als dass dies bei Stärkeestern der Fall ist.
- Zwar bietet der Markt neben lösemittelbasierten Alkydharzen auch umweltfreundlichere wasserdispergierbare Systeme an, diese erfordern jedoch den Zusatz von Komponenten, die bestenfalls anteilig biobasierten Ursprungs sein können (z.B. Amine, Emulgatoren). Weiterhin werden zur Beschleunigung der oxidativen Vernetzung Sikkative zugesetzt, die aufgrund ihres hohen Schwermetallanteils eine erhebliche Umweltbelastung darstellen.
- Trotz einer mittlerweile hundertjährigen Weiterentwicklung der Alkyde, weisen diese - offenbar systembedingt - grundsätzliche Beschränkungen auf. Hierzu zählen:
   ▪ Erhebliche Haftfestigkeitsschwäche auf Aluminium- und Zinkuntergründen
   ▪ Beschränkte Bewitterungsstabilität: Signifikante Neigung zu Vergilbung und Glanzverlust
   ▪ Bei Innenraumanwendung: Längeranhaltende Geruchsbelästigung.

Ebenso sind Polyurethansysteme und Epoxidharz sehr bekannt, die allerdings zumeist vollständig auf nicht nachwachsenden Rohstoffen basieren. Um den Bioanteil zu erhöhen, werden üblicherweise Öle - wie bei den Alkydharzen - eingesetzt.

Desweiteren sind Cellulose- basierte Systeme bekannt, beispielsweise Celluloseester: Acetat-, Butyrat- sowie Mischester. Auch Celluloseether und Cellulosenitrate werden als Beschichtungsmaterialien verwendet. Nachteilig hierbei ist allerdings, dass Cellulose ein relativ teurer Rohstoff ist und insbesondere Cellulosenitrate leicht zu Vergilbung neigen. Die Anwendungsfelder sind hierbei beispielsweise Nagellacke, Möbellacke und Druckfarben.

Als weitere Beschichtungsmaterialien sind Monomere bis niedermolekulare Dextrine (mit einem gewichtsgemittelten Molekulargewicht von ≤ 40.000 g/mol) als Abbauprodukte der Stärke bekannt. Für die Herstellung derartiger Systeme ist allerdings ein relativ hoher Energieaufwand notwendig. Dextrine weisen zudem eine hohe Wasserlöslichkeit auf. Desweiteren ist bekannt, dass Dextrine für Beschichtungsanwendungen geblendet oder gegrafted werden können, allerdings steigt hierbei auch der synthetische Anteil des Beschichtungssystems.

Aus dem Stand der Technik sind ebenso wässrige Stärkeester bzw. -ether-Systeme bekannt. Problematisch hierbei ist, dass der Substitutionsgrad der jeweiligen Stärkeester bzw. -ether für die Dispergierung in Wasser (bzw. auch Wasser und einem Co-Lösungsmittel) limitiert ist, so dass hinsichtlich chemisch-physikalischer Eigenschaften dieser Systeme relativ wenig Spielraum besteht. Durch die Anwesenheit von Wasser sind bei derartigen Systemen lange Durchtrocknungszeiten notwendig. Ein erhebliches Durchtrocknungshemmnis stellen auch die Colösemittel selbst dar, da diese in vielen Fällen bei Raumtemperatur einen noch deutlich niedrigeren Dampfdruck als Wasser aufweisen. Beim Einsatz von (nicht biobasierten) Vernetzern steigt erneut der Anteil an nicht-biobasierten Komponenten im System. Diese wässrigen Systeme haben zudem eine hohe Oberflächenspannung, so dass die Benetzbarkeit von Substraten, insbesondere metallischen und Kunststoffsubstraten deutlich erschwert bzw. gänzlich unmöglich ist. Grundsätzlich ist die Einstellung der Oberflächenspannung bzw. der Benetzungseigenschaften der wässrigen Systeme durch Additive nahezu unumgänglich.

Bei biobasierten Systemen im Allgemeinen ist nach wie vor sowohl der Preis als auch deren chemisch-physikalischen Eigenschaften im Vergleich zu kommerziellen synthetischen Beschichtungssystemen nicht konkurrenzfähig. Biobasierte Systeme sind zumeist hydrophil und werden normalerweise in wässrigen Medien angeboten. Hierbei kommt es jedoch zu einer starken Quellung der biobasierten Beschichtungssysteme und dadurch bedingt zu einer schlechten Anhaftung bzw. Delaminierung vom Substrat sowie geringer Wasserbeständigkeit der hergestellten Beschichtung. Sofern auf nicht wässrige Lösungsmittel zurückgegriffen wird, sind aus dem Stand der Technik Systeme in polaren Lösungsmitteln wie beispielsweise Pyridin, N,N-Dimethylformamid bzw. DMSO bekannt, die allerdings nicht anwendungsrelevante Lösungsmittel darstellen.

Im Allgemeinen sind lediglich geringe Konzentrationen des biobasierten Beschichtungsstoffes im jeweiligen Lösungsmittel zur Herstellung einer Dispersion möglich, so dass die erzielbaren Systeme keine praktische Anwendungsrelevanz besitzen.

Aufgabe der vorliegenden Erfindung ist es somit, ein biobasiertes Beschichtungssystem anzugeben, bei dessen Anwendung die vorgenannten Nachteile nicht auftreten. Insbesondere soll das Beschichtungssystem die Herstellung einer gut anhaftenden Beschichtung, die sich z. B. als Korrosionsschutzschicht eignet, insbesondere auf metallischen Substraten, ermöglichen, wobei die erzeugte Beschichtung eine hohe Feuchtigkeits- und Wasserbeständigkeit aufweist. Das Beschichtungssystem soll zudem einfach herstellbar und kostengünstig sein.

Diese Aufgabe wird bezüglich eines Verfahrens zur Herstellung einer Beschichtung mit den Merkmalen des Patentanspruchs 1, bezüglich eines beschichteten Substrats mit den Merkmalen des Patentanspruchs 17 sowie bezüglich Verwendungszwecke einer Beschichtung mit den Merkmalen des Patentanspruchs 22 gelöst. Die jeweiligen abhängigen Patentansprüche stellen hierbei vorteilhafte Weiterbildungen dar.

In einem ersten Aspekt betrifft die vorliegende Erfindung somit ein Verfahren zur Beschichtung eines Substrates, bei dem eine Lösung oder Dispersion, enthaltend oder bestehend aus mindestens einem Stärkeester, gelöst bzw. dispergiert in mindestens einem Lösungsmittel oder Lösungsmittelgemisch mit Hansen-Löslichkeitsparametern δ_{d} von 14 bis 19, δₚ von 2 bis 11, δₕ von 3 bis 15 MPa^{1/2}, zumindest bereichsweise und/oder zumindest einmal auf eine Oberfläche eines Substrates, ausgewählt aus der Gruppe bestehend aus Metallsubstraten, Glassubstraten und Kunststoffsubstraten mit Ausnahme von teilweise oder vollständig fluorierten Polymeren aufgebracht und anschließend getrocknet wird.

Die mit dem erfindungsgemäßen Verfahren erzeugte Beschichtung haftet dabei auf überraschend vielen Substraten, so dass sämtliche Metalloberflächen, Glasoberflächen und viele Kunststoffoberflächen (ggf. nach Anwendung eines üblichen Vorbehandungsverfahrens, beispielsweise Kunststoffsubstrate ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen, jedoch mit Ausnahme der im Allgemeinen als abweisend wirkenden teilweise oder vollständig fluorierten Polymeren) mit dem beschriebenen Verfahren beschichtet werden können.

In einer bevorzugten Ausführungsform weist das mindestens eine Lösungsmittel oder das Lösungsmittelgemisch Hansen-Löslichkeitsparameter von δ_{d} von 15 bis 18,5, δₚ von 3 bis 9, δₕ von 5 bis 11 MPa^{1/2} auf.

Insbesondere ist es von Vorteil, wenn das mindestens eine Lösungsmittel ausgewählt ist aus der Gruppe bestehend aus cyclischen Furanen, insbesondere Tetrahydrofuran; alkylierten cyclischen Furanen, insbesondere 2-Methyltetrahydrofuran; Ethylacetat, Dichlormethan, Trichlormethan und/oder Mischungen hiervon.

Überraschenderweise konnte festgestellt werden, dass mit dem erfindungsgemäßen Verfahren eine Beschichtung erzeugt werden kann, die gute Anhaftung an das Substrat sowie gleichzeitig eine sehr gute Wasserbeständigkeit, eine hohe Wasseraufnahmereversibilität und (auch ohne den Einsatz eines Härters) exzellente Barriereeigenschaften aufweist. Die Härte der Beschichtung ist zudem durch Wahl des Molekulargewichts und durch die Kettenlänge des Ester-Substituenten einstellbar. Bei Wahl eines möglichst kurzen Ester-Substituenten (beispielsweise ein von Essigsäure abgeleiteter Substituent) fällt die Härte höher aus, verglichen mit längerkettigen Estersubstituenten.

Das erfindungsgemäße Beschichtungssystem basiert auf nachwachsenden und günstigen Rohstoffen, nämlich Stärke. Der in den Stärkeestern enthaltene Esteranteil, also der "fossile Kohlenstoff", kann aufgrund der Wahl eines mittleren Substitutionsgrades (beispielsweise DS: 0,5 bis 3, vorzugsweise 1 bis 2) deutlich niedriger als der Anteil fossilen Kohlenstoffs in Alkydharzen ausfallen. Zudem ist ebenso die Möglichkeit gegeben, dass die zur Veresterung eingesetzten Fettsäuren (beispielsweise Fettsäuren mit geradzahliger Anzahl von Kohlenstoffatomen) natürlich synthetisiert und somit ebenso biobasiert hergestellt werden können. Derartige Systeme zeichnen sich somit durch einen fast vollständig biologisch herstellbaren Rohstoffanteil aus.

Zudem weisen die mit dem erfindungsgemäßen Verfahren aufgebrachten Stärkeester-Beschichtungen im Gegensatz zu Alkydharzen überraschenderweise eine exzellente Haftfähigkeit insbesondere auf Metallsubstraten, insbesondere Aluminium- bzw. Zinksubstraten auf.

Die Stärkeester können bevorzugt in Tetrahydrofuran und - insbesondere vorteilhaft - in 2-Methyl-Tetrahydrofuran gelöst oder dispergiert werden und bilden nach Applikation auf metallischen und polymeren Untergründen auch ohne Additivzusätze gut haftende, homogene, physikalisch trocknende Filme.

### Eine Vielzahl polymerer Werkstoffe ist gegenüber (M)THF beständig (z.B. PET, PC, PP,)

2-Methyl-Tetrahydrofuran ist gegenüber Tetrahydrofuran vorteilhaft, weil:
∘ es zu hohem Anteil aus nachwachsenden Rohstoffen hergestellt werden kann
∘ sein Gefährdungspotential geringer als das des Tetrahydrofurans ist.

Aufgrund des hohen Dampfdrucks der Lösemittel erfolgt eine rasche Durchtrocknung der Filme; schon nach wenigen Stunden sind diese - anders als Alkydharze - geruchsneutral.

Der Umstand, dass die Stärkeester fast nur in organischen Lösungsmitteln mit beschriebenen Hansen-Löslichkeitsparametern, beispielsweise und vorteilhaft in MTHF/THF löslich/dispergierbar sind, führt überraschenderweise zu einer hohen Beständigkeit der Filme gegenüber anderen organischen Lösemitteln und wässrigen Agenzien.

Durch Variation der Substituentenlänge und des Substitutionsgrades lassen sich wesentliche Eigenschaften (z.B. Härte, Elastizität, Barrierewirkung) vorhersagbar einstellen.

Die Ester-Gruppierung des erfindungsgemäßen eingesetzten Stärkeesters ist dabei insbesondere von mindestens einer linearen oder verzweigten Carbonsäure mit 2 bis 36 Kohlenstoffatomen abgeleitet, insbesondere von einer linearen Carbonsäure mit 2, 3, 4, 6, 8, 10, 12, 14, 16 oder 18 Kohlenstoffatomen. Ebenso sind jedoch cyclische und/oder aromatische Carbonsäuren mit 6 bis 36 Kohlenstoffatomen verwendbar.

Unter die Stärkeester fallen somit einfache Ester (d. h. Stärkeester, die nur mit einer Art von Carbonsäure substituiert sind), aber beispielsweise auch Mischester, bei denen ein Gemisch von mindestens zwei Carbonsäuren zur Veresterung der Stärke eingesetzt wird.

Die Synthese der erfindungsgemäß eingesetzten Stärkeester kann beispielsweise durch Umsetzen der jeweiligen Stärke mit Veresterungsreagenzien, wie beispielsweise Vinyl-Carbonsäuren, Carbonsäure-Anhydriden, Carbonsäure-Chloriden oder Reaktivestern hergestellt werden.

Für die erfindungsgemäßen Zwecke können beliebige Stärkeester eingesetzt werden.

Die Stärke, die als Ausgangsmaterial für die Herstellung des Stärkeesters dieser Erfindung verwendet werden kann, kann beispielsweise aus jeder pflanzlichen Quelle stammen, einschließlich und insbesondere ausgewählt aus der Gruppe bestehend aus Maisstärke, Wachsmaisstärke, Amylomaisstärke, Weizenstärke, Kartoffelstärke, Amylopektin-Kartoffelstärke, Erbsenstärke (z.B. Palerbsenstärke, Markererbsenstärke), Tapiokastärke oder Reisstärke einschließlich aller daraus abgeleiteten Derivate.

Derivate zur Herstellung der Stärkeester können beispielsweise Dextrine aus säurekatalysierter-, thermischer oder enzymatischer Umsetzung, oxidierte Stärken hergestellt mit Natriumhypochlorit oder Wasserstoffperoxid, dünnkochende Stärken aus einer enzymatischen oder säurekatalytischen Umsetzung oder auch daraus abgeleitete Stärkeether sein.

Vorzugsweise weist der mindestens eine Stärkeester eine gewichtsgemittelte molare Masse M_{w} von 20.000 bis 4·10⁷ g/mol, bevorzugt von 40.000 bis 5·10⁶, besonders bevorzugt von 1·10⁵ bis 1·10⁶ g/mol auf.

Methoden zur Bestimmung der gewichtsgemittelten molaren Masse M_{w} sind dem Fachmann bekannt und umfassen z. B. Bestimmungsmethoden mittels GPC (Gel Permeations Chromatographie) gekoppelt mit entsprechenden Detektionsverfahren wie Differentialrefraktometer und MALLS (Multi Angle Laser Light Scattering).

Die eingesetzte Lösung bzw. Dispersion weist insbesondere eine Scherviskosität von 10 bis 10⁵ mPa·s, bevorzugt von 50 bis 10⁴ mPa·s, besonders bevorzugt von 100 bis 1000 mPa·s auf.

Die Scherviskosität kann beispielsweise mit einem Rotationsrheometer (Typ: "Malvern Kinexus pro") in einem Scherratenbereich von 10-1000 s⁻¹ bestimmt werden.

Bevorzugt beträgt der Anteil des mindestens einen Stärkeesters an der Lösung oder Dispersion 5,0 bis 60 Gew.-%, bevorzugt 10 bis 50 Gew.-%, besonders bevorzugt 20 bis 45 Gew.-%.

Zudem kann der für die Zwecke der vorliegenden Erfindung eingesetzten Lösung oder Dispersion ein Härter zugesetzt sein, der nach Auftrag der Lösung bzw. Dispersion auf das zu beschichtende Substrat aktiviert, beispielsweise thermisch oder aktinisch aktiviert werden kann und so zu einer Vernetzung der Stärkeester durch Reaktion mit den nicht veresterten OH-Funktionalitäten des Stärkeesters beiträgt. Bevorzugte Härter sind für den Fall ihres Vorhandenseins beispielsweise ausgewählt aus der Gruppe bestehend aus zumindest bifunktionellen organischen Isocyanaten, Epoxyderivaten, bi- und mehrfunktionale Aldehyden, anorganischen Vernetzern, Melamin- oder Benzoguanaminharzen sowie Mischungen und/oder Kombinationen hiervon.

Die Lösung bzw. Dispersion kann zudem vorzugsweise Pigmente und/oder Farbstoffe enthalten. Korrosionsschutzpigmente und/oder Korrosionsschutzadditive könnten ebenso zugesetzt werden. Weiterhin wäre der Zusatz von Lichtschutzadditiven denkbar, damit (auch bei Innenraumnutzung) eine Vergilbung bei langjähriger Gebrauchsdauer möglichst vermieden wird. Weiterhin könnten auch Barrierepigmente zugesetzt werden, um die Gas- bzw. Wasser(dampf)dichtigkeit der Beschichtung zu erhöhen.

Die Lösung oder Dispersion kann beispielsweise durch Streichen, Rakeln, Sprühen und/oder Tauchen aufgebracht werden.

Bevorzugt erfolgt das Trocknen der Lösung und/oder Dispersion durch Abdampfen des Lösungsmittels, ggf. unter gegenüber Normaldruck vermindertem Druck und/oder gegenüber Normaldruck erhöhten Temperaturen. Beispielsweise kann das beschichtete Substrat auf einfache Weise unter Umgebungsbedingungen getrocknet werden.

Gegenstand der vorliegenden Erfindung ist zudem ein beschichtetes Substrat, umfassend ein Substrat, ausgewählt aus der Gruppe bestehend aus Metallsubstraten, Glassubstraten und Kunststoffsubstraten mit Ausnahme von teilweise oder vollständig fluorierten Polymeren, das zumindest bereichsweise eine oder mehrere Beschichtungen, enthaltend oder bestehend aus mindestens einem Stärkeester, umfasst.

Die Beschichtung zeichnet sich durch eine hohe Anhaftung am Substrat aus. Beispielsweise und bevorzugt weist die Beschichtung einen Haftfestigkeits-Kennwert, bestimmt nach DIN EN ISO 2409:2013, von 0 bis 3, weiter bevorzugt von 0 bis 2 auf.

Die Beschichtung kann eine Trockenschichtdicke von 1 µm bis 1000 µm, insbesondere von 10 µm bis 500 µm, bevorzugt 10 µm bis 300 µm, besonders bevorzugt 15 µm bis 200 µm aufweisen.

Bevorzugte Metallsubstrate sind hierbei Aluminiumsubstrate, Zinksubstrate und Stahlsubstrate.

Bevorzugte Kunststoffsubstrate sind insbesondere ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

Das beschichtete Substrat kann insbesondere in Form von Fahrzeugbestandteilen (insbesondere im Innenraum), Gebrauchsgegenständen und Konsumartikeln, Küchen- und Badezimmerausstattung, Gehäusen von Elektrogeräten, Fensterrahmen, Türen und Mobiliar ausgebildet sein.

Für den Fall, dass die eingesetzte Lösung/Dispersion Pigmente und/oder Farbstoffe enthält, sind diese ebenso in der daraus hergestellten Beschichtung enthalten.

Zudem betrifft die vorliegende Erfindung die Verwendung einer auf einem Substrat aufgebrachten Beschichtung, enthaltend oder bestehend aus mindestens einem Stärkeester, als Korrosionsschutz, als Schutzbeschichtung gegenüber mechanischer und chemischer Einwirkung, als Barriere gegen Wasser, Elektrolytlösungen, Wasserdampf und Sauerstoff, als dekorative Beschichtung, insbesondere bei Zusatz von Pigmenten und/oder Farbstoffen als dekorative oder sonstig funktionelle Beschichtung.

## Patentansprüche

1. Verfahren zur Beschichtung eines Substrates, bei dem eine Lösung oder Dispersion, enthaltend oder bestehend aus
mindestens einem Stärkeester, gelöst bzw. dispergiert in
mindestens einem Lösungsmittel oder Lösungsmittelgemisch mit Hansen-Löslichkeitsparametern δ_{d} von 14 bis 19, δₚ von 2 bis 11, δₕ von 3 bis 15 MPa^{1/2}, zumindest bereichsweise zumindest einmal auf eine Oberfläche eines Substrates, ausgewählt aus der Gruppe bestehend aus Metallsubstraten, Glassubstraten und Kunststoffsubstraten mit Ausnahme von teilweise oder vollständig fluorierten Polymeren aufgebracht und anschließend getrocknet wird.

2. Verfahren nach Anspruch 1, **dadurch gekennzeichnet, dass** das
Metallsubstrat ausgewählt ist aus Aluminiumsubstraten, Zinksubstraten und Stahlsubstraten, und
das Kunststoffsubstrat ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

3. Verfahren nach einem der vorhergehenden Ansprüche, **dadurch gekennzeichnet, dass** das mindestens eine Lösungsmittel mit oder Lösungsmittelgemisch Hansen-Löslichkeitsparameter von δ_{d} von 15 bis 18,5, δₚ von 3 bis 9, δₕ von 5 bis 11 MPa^{1/2} aufweist.

4. Lösung oder Dispersion nach einem der vorhergehenden Ansprüche, **dadurch gekennzeichnet, dass** das mindestens eine Lösungsmittel ausgewählt ist aus der Gruppe bestehend aus cyclischen Furanen, insbesondere Tetrahydrofuran; alkylierten cyclischen Furanen, insbesondere 2-Methyltetrahydrofuran; Ethylacetat, Dichlormethan, Trichlormethan und/oder Mischungen hiervon.

5. Verfahren nach einem der vorhergehenden Ansprüche, **dadurch gekennzeichnet, dass** der mindestens eine Stärkeester einen Substitutionsgrad (DS) von 0,5 bis 3,0, bevorzugt von 1,0 bis 2,0 aufweist.

6. Verfahren nach einem der vorhergehenden Ansprüche, **dadurch gekennzeichnet, dass** die Estergruppierung von mindestens einer linearen oder verzweigten Carbonsäure mit 2 bis 36 Kohlenstoffatomen abgeleitet ist, insbesondere von einer linearen Carbonsäure mit 2, 3, 4, 6, 8, 10, 12, 14, 16 oder 18 Kohlenstoffatomen.

7. Verfahren nach einem der vorhergehenden Ansprüche, **dadurch gekennzeichnet, dass** der mindestens eine Stärkeester eine gewichtsgemittelte molare Masse M_{w} von 20.000 bis 4·10⁷ g/mol, bevorzugt von 40.000 bis 5·10⁶, besonders bevorzugt von 1·10⁵ bis 1·10⁶ g/mol aufweist.

8. Verfahren nach einem der vorhergehenden Ansprüche, **dadurch gekennzeichnet, dass** die Lösung oder Dispersion eine Scherviskosität von 10 bis 10⁵ mPa·s, bevorzugt von 50 bis 10⁴ mPa·s, besonders bevorzugt von 100 bis 1000 mPa·s aufweist.

9. Verfahren nach einem der vorhergehenden Ansprüche, **dadurch gekennzeichnet, dass** der Anteil des mindestens einen Stärkeesters an der Lösung oder Dispersion 5,0 bis 60 Gew.-%, bevorzugt 10 bis 50 Gew.-%, besonders bevorzugt 20 bis 45 Gew.-% beträgt.

10. Verfahren nach einem der vorhergehenden Ansprüche, **dadurch gekennzeichnet, dass** mindestens ein Härter, ausgewählt aus der Gruppe bestehend aus zumindest bifunktionellen organischen Isocyanaten, Epoxyderivaten, bi- und mehrfunktionale Aldehyden, anorganischen Vernetzern, Melamin- oder Benzoguanaminharzen sowie Mischungen und/oder Kombinationen hiervon enthalten ist.

11. Beschichtetes Substrat, umfassend ein Substrat, ausgewählt aus der Gruppe bestehend aus Metallsubstraten, Glassubstraten und Kunststoffsubstraten mit Ausnahme von teilweise oder vollständig fluorierten Polymeren, das zumindest bereichsweise eine Beschichtung, enthaltend oder bestehend aus mindestens einem Stärkeester umfasst.

12. Beschichtetes Substrat nach vorhergehendem Anspruch, **dadurch gekennzeichnet, dass** die Beschichtung einen Haftfestigkeits-Kennwert, bestimmt nach DIN EN ISO 2409:2013 von 0 bis 3, weiter bevorzugt von 0 bis 2 aufweist.

13. Beschichtetes Substrat nach einem der beiden vorhergehenden Ansprüche, **dadurch gekennzeichnet, dass** die Beschichtung eine Trockenschichtdicke von 1 µm bis 1000 µm, insbesondere von 10 µm bis 500 µm aufweist.

14. Beschichtetes Substrat nach einem der Ansprüche 11 bis 13, **dadurch gekennzeichnet, dass**
das Metallsubstrat ausgewählt ist aus Aluminiumsubstraten, Zinksubstraten und Stahlsubstraten, und
das Kunststoffsubstrat ausgewählt aus der Gruppe bestehend aus Polyalkylenen, z.B. Polyethylen oder Polypropylen; Polycarbonaten; Polyestern, z.B. Polyethylenterephthalat; Polyamiden; Polystyrolen sowie Polyurethanen.

15. Beschichtetes Substrat nach einem der Ansprüche 11 bis 14 in Form von Fahrzeugbestandteilen (insbesondere im Innenraum), Gebrauchsgegenständen und Konsumartikeln, Küchen- und Badezimmerausstattung, Gehäusen von Elektrogeräten, Fensterrahmen, Türen und Mobiliar.

16. Beschichtetes Substrat nach einem der Ansprüche 11 bis 15, **dadurch gekennzeichnet, dass** die Beschichtung Pigmente und/oder Farbstoffe enthält.

17. Verwendung einer auf einem Substrat aufgebrachten Beschichtung, enthaltend oder bestehend aus mindestens einem Stärkeester, als Korrosionsschutz, als Schutzbeschichtung gegenüber mechanischer und chemischer Einwirkung, als Barriere gegen Wasser, Elektrolytlösungen, Wasserdampf und Sauerstoff, als dekorative Beschichtung, insbesondere bei Zusatz von Pigmenten und/oder Farbstoffen als dekorative oder sonstig funktionelle Beschichtung.
